# FASCICULE DE BREVET EUROPEEN

(11) **EP 0 960 035 B1**
(45) Date de publication et mention de la délivrance du brevet: **29.01.2003**
(21) Numéro de dépôt: 98955678.2
(22) Date de dépôt: 17.11.1998
(51) Int. Cl.: B60J 1/02, B60J 1/18, B60J 10/02

(54) **VITRAGE DEMONTABLE RAPIDEMENT**
SCHNELL ZERLEGBARE VITRINE
QUICKLY DETACHABLE GLAZING SHEET

(30) Priorité: 18.11.1997 FR 9714388
(43) Date de publication de la demande: 01.12.1999
(73) Titulaire: SAINT-GOBAIN GLASS FRANCE, 92400 Courbevoie (FR)
(72) Inventeur: DE PAOLI, Martial, F-60400 Cuts (FR)
(74) Mandataire: Cardin, Elise
(86) Numéro de dépôt international: FR9802452
(87) Numéro de publication internationale: WO99025575

(56) Documents cités:
- EP-A- 0 061 198
- EP-A- 0 121 480
- EP-A- 0 398 077
- EP-A- 0 748 709
- EP-A- 0 748 710
- FR-A- 2 649 654

## Description

L'invention concerne un système de montage d'un vitrage dans une baie, notamment d'un vitrage de véhicule de transport ; le vitrage est démontable rapidement, notamment pour permettre l'évacuation de passagers d'un véhicule.

Dans la vie moderne, on souhaite souvent pouvoir pratiquer rapidement une ouverture là où se trouve un vitrage. C'est par exemple le cas dans les locaux recevant le public lorsque, en cas d'incendie, on souhaite pouvoir provoquer rapidement l'évacuation de fumées toxiques. C'est également le cas dans les véhicules transportant les personnes ; lors d'un accident, les issues habituelles du véhicule peuvent être impraticables il faut alors pouvoir rapidement créer de nouvelles ouvertures et on souhaite en général le faire à l'endroit où se trouvaient les vitrages. Un moyen très utilisé pour réaliser de telles ouvertures consiste à employer comme vitrage du verre trempé thermiquement. Dans ce cas, il suffit pour remplacer le vitrage par une ouverture de pouvoir frapper le vitrage avec un marteau pointu qui provoque la casse explosive du verre trempé et libère complètement l'ouverture de la baie. Dans les véhicules transportant du public, il est courant de voir à la disposition du public en cas de danger des petits marteaux spécialement adaptés à la casse du verre trempé.

Lorsque le verre n'est pas trempé, qu'il s'agit néanmoins d'un verre de sécurité mais feuilleté ou d'un vitrage à base de matière plastique difficile à rompre, alors les méthodes précédentes ne sont plus utilisables, et il faut pouvoir disposer de systèmes de démontage rapide de tels vitrages. Ainsi, la demande de brevet EP-A-0 061 198 propose une fenêtre, en particulier une fenêtre de véhicule qui est équipée d'un cadre spécial comportant, tout le long d'une garniture en élastomère, un câble équipé d'une poignée le tout étant monté de telle manière qu'en tirant la poignée, on extrait le câble du profilé en élastomère ce qui a pour effet de disjoindre le vitrage de son joint périphérique et ainsi de libérer l'ouverture. Dans un autre document EP-A-0 121 480, on utilise un principe du même genre mais dans une mise en oeuvre beaucoup plus simple. Ici le vitrage est associé à la baie de la carrosserie d'une automobile par l'intermédiaire d'un joint en élastomère extrudé qui adhère à la fois au vitrage et à la tôle de la carrosserie. Au moment du dépôt de l'élastomère extrudé sur le vitrage, on a procédé à la coextrusion d'une part du polymère qui fournira, une fois durci, la matière de l'élastomère et d'autre part, d'un fil qui est placé au bord du profilé en élastomère, tous deux faisant toute la périphérie du vitrage. Une fois le vitrage collé dans la baie de carrosserie, on peut séparer le vitrage de la tôle de la baie en exerçant une traction sur le câble du coté opposé à celui où il repose. On déchire ainsi progressivement le joint en élastomère sur toute la périphérie du vitrage, ce qui permet d'extraire le vitrage de la baie. Les techniques précédentes qui utilisent un seul et même câble pour libérer ou pour trancher le joint périphérique qui relie le vitrage à la baie présentent l'inconvénient de nécessiter l'extraction de très grandes longueurs de câbles, ce qui dans le cas d'un vitrage de grandes dimensions, comme par exemple des pare-brise d'autocars ou d'autobus, entraîne des longueurs de fils extrêmement encombrantes à l'intérieur du véhicule. D'autre part, les efforts de rupture du joint en élastomère sont importants mais la section du fil reste obligatoirement faible ce qui complique le choix d'un matériau adapté pour constituer le fil en question. Par ailleurs, le joint périphérique après l'extraction du vitrage ne peut pas être réutilisé, c'est-à-dire que si l'on voulait extraire le vitrage simplement pour procéder à une retouche de peinture ou à une autre opération aussi bénigne, on ne pourrait pas réinstaller le vitrage ensuite, les techniques étant irréversibles.

Le vitrage de l'invention avec son type de montage doit être particulièrement adapté à la réalisation de vitrages destinés aux moyens de transport et spécialement aux autobus et autocars. Ces véhicules sont de plus en plus conçus de telle manière qu'ils ne possèdent plus de lunette arrière en verre. On constate souvent que, notamment, les autocars qui sont destinés à faire de longs voyages sont équipés à l'arrière d'un compartiment pour les bagages qui occupe toute la hauteur du véhicule et exclue qu'on puisse installer dans cette région un vitrage. En cas d'accident, cette situation entraîne un risque important pour les passagers lorsque le véhicule est couché sur le côté. En effet, à ce moment là, les issues naturelles des portières sont, soit sous le véhicule, soit en position haute où on ne peut les atteindre et il en va de même pour les vitrage latéraux. Les passagers qui désirent sortir rapidement du véhicule n'ont plus la, solution de casser la lunette arrière et on souhaite donc, dans ces conditions, que le pare-brise puisse être démonté rapidement de manière à permettre aux passagers de sortir de ce véhicule en situation dangereuse.

Dans le cas particulier des autobus et autocars, l'invention se donne donc pour tache de réaliser un système de montage et surtout de démontage du pare-brise qui permette de libérer très rapidement l'ouverture.

L'invention se donne pour tâche, d'une manière générale, de fournir un système de montage d'un vitrage dans une baie qui permette notamment l'évacuation de passagers, mais qui n'ait pas les inconvénients des systèmes précédents. Selon l'invention, ce but est atteint grâce à un système de montage d'un vitrage dans une baie, notamment d'un vitrage de véhicule de transport comportant un cadre profilé susceptible d'être arraché de la baie notamment pour permettre l'évacuation de passagers dans lequel le cadre est rigide, dans lequel le vitrage est lié au cadre et dans lequel le cadre est associé à la baie par des fixations mécaniques ponctuelles dont la libération s'effectue au moins depuis l'un des côtés du vitrage notamment depuis l'intérieur du véhicule (système du type divulgué dans EP-A-0 398 077), caractérisé en ce que le cadre exerce une force sensiblement perpendiculairement à la surface qu'il définit, sur la baie. Le fait d'utiliser dans l'invention des fixations mécaniques ponctuelles permet de limiter les efforts qui sont associés à chaque fixation aussi bien les efforts de libération lorsqu'on veut ouvrir la baie, que les efforts qui permettent d'assurer l'étanchéité entre le vitrage et la baie.

Dans un mode de réalisation avantageux, les fixations mécaniques ponctuelles comprennent un élément de fixation s'étendant dans une direction non normale à la surface du vitrage coopérant avec le cadre, de préférence sensiblement parallèle à cette surface, cet élément étant mobile dans ladite direction pour effectuer la libération de la fixation mécanique ponctuelle. Ce type de fixation peut être déverrouillé rapidement et simplement par un simple geste sensiblement linéaire avec un effort de traction/pression limité.

Pour effectuer la libération des fixations mécaniques ponctuelles, le système selon l'invention peut avantageusement comprendre au moins un moyen de libération, commandé depuis au moins un côté du vitrage et agissant sur chacune des fixations mécaniques ponctuelles, successivement ou simultanément, de préférence simultanément.

Un tel moyen de libération peut agir sur lesdites fixations notamment en transmettant un effort mécanique ou un signal électrique commandant la libération.

Dans une première variante de l'invention, le système de montage comporte un cadre rigide qui est indépendant avec des fixations mécaniques ponctuelles qui comportent des broches sensiblement parallèles entre elles et à la direction de montage du vitrage dans la baie. Dans ce cas, les broches traversent des trous correspondants et les broches et les trous sont prévus indifféremment, l'un sur le cadre et l'autre sur la baie. Les fixations mécaniques ponctuelles de cette variante sont particulièrement sûres et garantissent un montage du vitrage très simplifié, puisqu'il s'agit de présenter les broches devant les trous correspondants et de les introduire avant de les verrouiller. Il est avantageux, dans le cas du système précédent, que le cadre rigide possède une section triangulaire dans les zones où le vitrage bombé possède une forte courbure périphérique. Par ailleurs, on assure le blocage des broches par des goupilles qui traversent une lumière pratiquée dans les broches et qui est sensiblement perpendiculaire à leur axe. Ces goupilles ont, de préférence, une épaisseur croissante, leur largeur est constante et elle leur permet ainsi de coulisser sans rotation dans la lumière des broches.

Dans le cas de cette variante, il est également avantageux que les goupilles soient reliées par un cordon en tant que moyen de libération, ce cordon comportant éventuellement des éléments bloquants entre les goupilles et qui sont placés de manière à assurer leur extraction une à une.

Dans un autre mode de réalisation avantageux, le moyen de libération peut comprendre au moins un corps expansible, par exemple un ballon ou un boudin gonflable par injection d'un gaz sous pression, et dont l'expansion exerce une pression sur un organe de libération des fixations ponctuelles. Ce moyen de libération est plus particulièrement approprié à une libération simultanée des fixations ponctuelles.

Dans une autre variante de ce même système comportant des broches et des trous, l'invention prévoit des fixations mécaniques ponctuelles qui comportent des éléments bloquants associés aux broches dont le déverrouillage est effectué par un explosif. Le système comprend alors avantageusement un dispositif de commande de l'explosif que l'on peut actionner depuis un côté du vitrage et qui peut déclencher les explosions simultanément ou successivement. Tous les exemples de réalisation de cette variante réalisent, de préférence, l'étanchéité entre le cadre rigide et la baie par un joint mousse.

Une autre variante de l'invention prévoit que le système de montage comporte un cadre rigide réalisé en élastomère. Le profil de ce cadre comporte des ressauts où les fixations mécaniques ponctuelles liées à la baie exercent une pression. De préférence, ces fixations mécaniques ponctuelles comportent des verrous dont le coulissement applique progressivement le cadre sur la baie. Les verrous peuvent avantageusement être adaptés de manière à coopérer avec un moyen de libération tel que décrit précédemment.

Cette technique permet grâce au choix d'un élastomère avec une dureté adaptée, d'une part, et deuxièmement au choix d'un nombre de fixations mécaniques ponctuelles correspondant, d'avoir une étanchéité sans autre moyen externe. Dans ce dernier cas, de préférence, les fixations mécaniques ponctuelles comportent des crans encliquetés lorsqu'ils sont fermés et dont la libération s'effectue par une action sur le cliquet.

Les figures et la description qui suivent permettront de comprendre le fonctionnement de l'invention et d'en percevoir les avantages :
- **la figure 1** montre une vue d'ensemble du vitrage de l'invention,
- **la figure 2** montre une coupe d'une fixation mécanique ponctuelle,
- **la figure 3** est une variante de la même fixation,
- **la figure 4** montre le même dispositif adapté à une zone bombée du vitrage,
- **la figure 5** montre une vue détaillée du dispositif de la figure 2 avec en plus un cordon d'extraction,
- **la figure 6** montre un autre exemple de fixation mécanique ponctuelle ; c'est une variante de la figure 2,
- **la figure 7** représente un autre type de fixation mécanique ponctuelle qui utilise un cadre en élastomère,
- **la figure 8** est un détail de la figure 7.

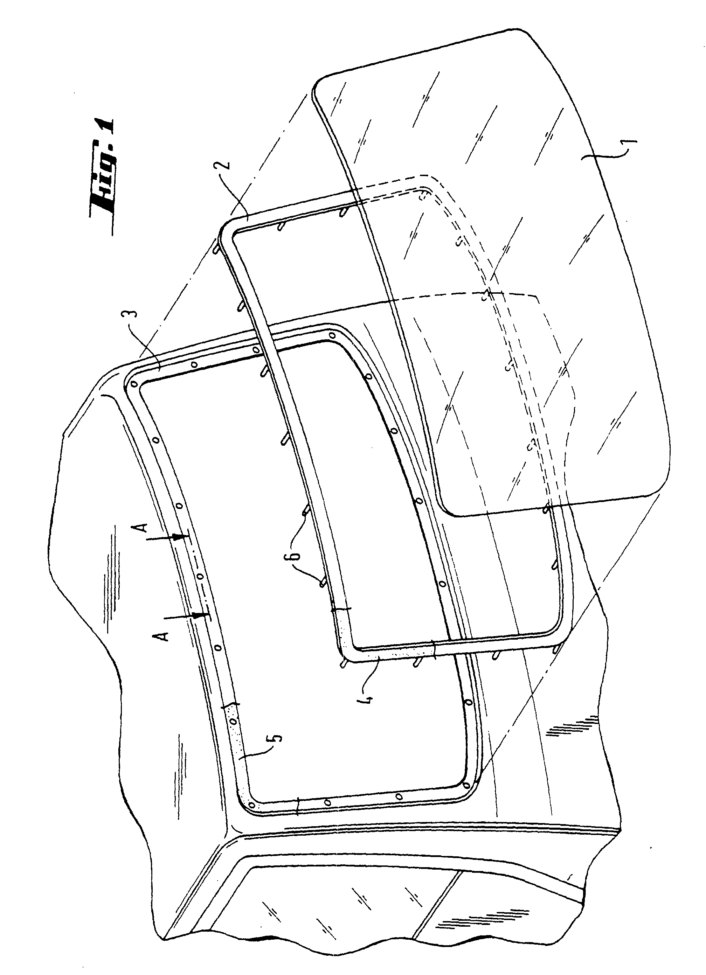

Le principe de l'invention dans le cas d'un pare-brise de véhicule apparaît sur la **figure 1.** L'élément essentiel en est un cadre rigide 2 associé au vitrage 1. Le cadre est fixé mécaniquement au vitrage et également de manière étanche. En revanche l'association entre le cadre rigide et la baie de carrosserie se fait par des fixations mécaniques ponctuelles. La **figure 1** montre un exemple simple de telles fixations constituées de broches 6 qui pénètrent dans des trous de la baie de carrosserie 3 et qui sont fixées à l'intérieur du véhicule par des moyens rapides à démonter. Ce mode de réalisation le plus simple et préféré de l'invention est illustré dans les figures suivantes 2, 3, 4, 5 et 6.

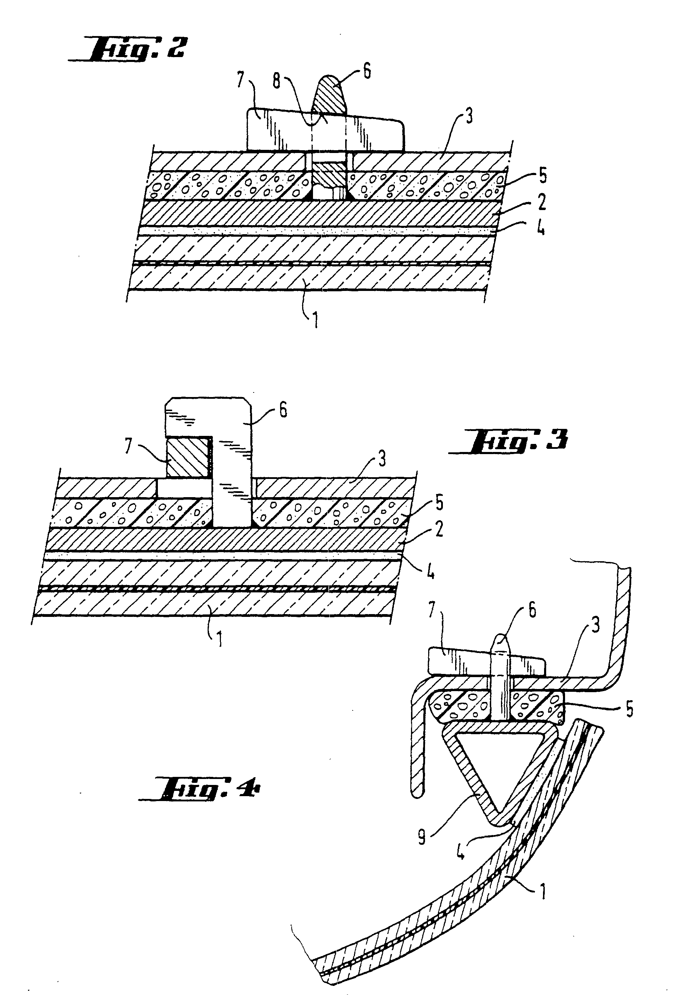

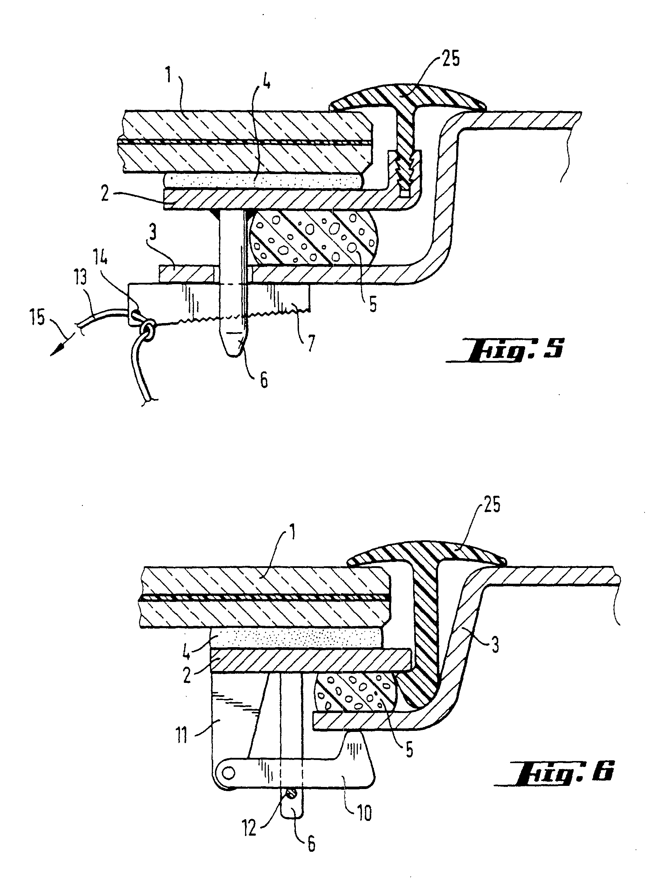

La **figure 2** montre une coupe du pare-brise, du cadre, de la tôle et du système de fixation ponctuelle dans une zone relativement plane du vitrage, par exemple en partie haute ou en partie basse centrales. Le vitrage 1 est un vitrage feuilleté traditionnel composé de deux feuilles de verre associées par un film thermoplastique, tel que du polyvinylbutyral. Le cadre 2 est métallique ; il est conçu de manière à pouvoir épouser intimement la surface interne de la périphérie du vitrage sur laquelle il est collé grâce une couche de colle 4, comme par exemple à base de polyuréthane, et par ailleurs dans l'exemple de la **figure 2,** il est équipé de broches 6 qui, dans des parties relativement planes du vitrage, sont perpendiculaires au cadre. L'important en ce qui concerne la direction des broches par rapport au vitrage et au cadre est que, lorsque le vitrage est en phase d'installation ou de désinstallation, toutes les broches puissent être extraites des trous simultanément. Il est donc important qu'elles soient parallèles les unes aux autres, ce qui suppose, étant donnée la forme bombée du pare-brise, qu'elles fassent des angles variables avec la surface de celui-ci.

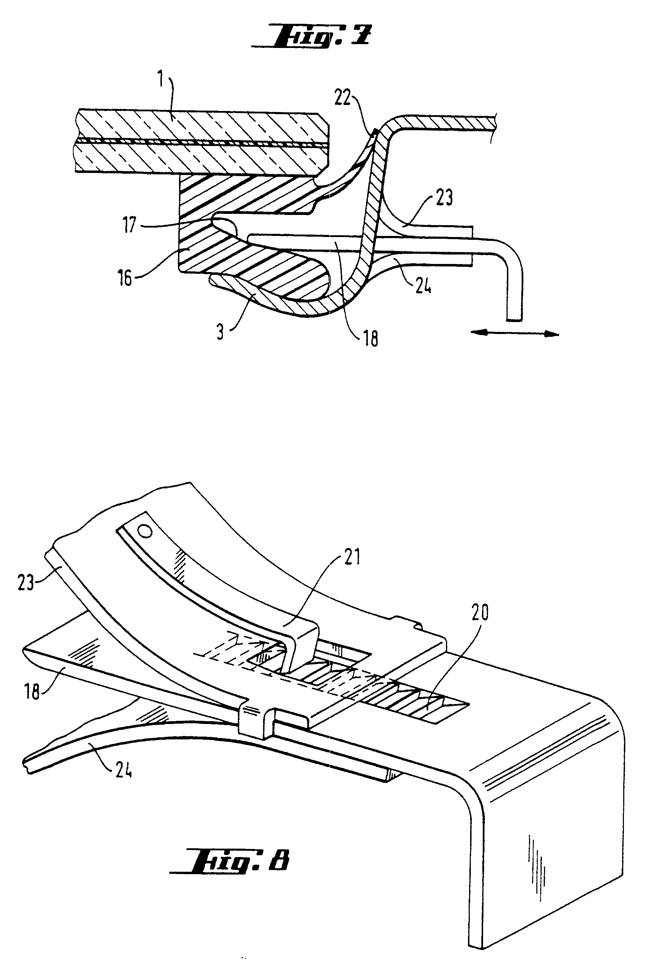

On voit sur la **figure 4** une solution au problème que pose l'orientation des broches dans les zones très bombées sur les bords du pare-brise. Dans ces zones, on a choisi d'utiliser un cadre dont la section n'est plus rectangulaire comme sur la figure 2, mais qui est triangulaire, en 9 sur la **figure 4**.

Sur la **figure 2,** on a représente un système de verrouillage utilisant une goupille 7. Celle-ci est insérée dans une lumière 8, elle-même percée dans la broche 6. La goupille 7 a une forme triangulaire qui permet, au fur et à mesure de son enfoncement dans la lumière 8, d'exercer une pression croissante sur la tôle 3 et donc d'écraser de plus en plus le joint 5 prévu entre le cadre 2 et la tôle 3. Ce joint 5 est en matière élastomère alvéolaire, sa fonction est d'assurer l'étanchéité entre le vitrage et la baie ; de préférence, le joint 5 n'est collé que d'un seul coté, soit sur le cadre, soit sur la baie, mais il est également possible, grâce à un choix de matière adaptée, une matière susceptible de se déchirer facilement, d'avoir un collage effectif des deux côtés et, au moment de l'ouverture du vitrage, d'avoir une déchirure au sein de la matière du joint 5.

Sur la **figure 3,** on présente une variante de la fixation ponctuelle de la **figure 2.** Ici, la broche 6 liée au cadre a la forme d'un crochet et la goupille est remplacée par un barreau 7 en appui sur deux côtés du trou prévu dans la tôle de carrosserie 3. La libération de la broche 6 se fait en tirant latéralement sur le barreau 7 qui joue le même rôle que la goupille 7 de la **figure 2**. Dans les deux cas, la libération se fait sans détérioration du cadre et/ou des éléments de fixation, le vitrage ainsi extrait du cadre étant prêt à être utilisé à nouveau. Le système autorise donc le démontage du vitrage pour retouche de peinture ou autre opération bénigne, avec remise en place simple et rapide.

Le système de broches et de goupilles représenté sur les **figures 2, 3 et 4** est simplement déverrouillé par une action longitudinale sur la goupille 7 ou, éventuellement, latérale dans le cas d'une section en C comme sur la **figure 3**.

Sur la **figure 5**, on a représenté un élément supplémentaire qui permet d'agir successivement sur toutes les goupilles 7 du type de celle de la **figure 2** qui fixent le pare-brise dans la baie. Il s'agit d'un cordon 13 équipé de noeuds 14 qui jouent le rôle d'éléments bloquants et qui permettent, lorsqu'on exerce une traction dans le sens de la flèche 15 sur le cordon 13, d'extraire successivement toutes les goupilles. On comprend que, en l'absence de noeuds, le cordon 13 est apte à déverrouiller simultanément les goupilles 7.
Le cordon 13 peut être avantageusement associé à une poignée ou à un système de manivelle qui permettra de déverrouiller l'ensemble du pare-brise.

En variante, les goupilles 7 peuvent être actionnées par l'intermédiaire d'un organe expansible susceptible, une fois expansé, de venir en appui contre un surface correspondante de la goupille et d'exercer une pression dans le sens de la flèche 15. Un tel organe peut notamment employer un boudin gonflable coopérant avec toutes les goupilles, ou bien une série de ballons gonflables associés chacun respectivement à une goupille, dont le gonflement peut être réalisé au moyen d'une ou plusieurs cartouches de gaz comprimé, actionnée(s) depuis un côté du vitrage.

La **figure 6** représente une variante du système utilisant les broches des figures de 1 à 5. Cette fois le cadre qui supporte les broches à une section en L, son aile 11 porte ici des leviers 10 qui viennent appuyer sur la tôle de la baie 3 et qui sont bloqués dans la position serrée grâce à des cliquets 12 placés sur la broche 6(ou à un câble associé, éventuellement, à une manivelle). Les systèmes à broches qu'on vient de décrire ont été représentés la broche étant associée au cadre 2 et le trou complémentaire de la broche se trouvant sur la baie 3. Il est évident qu'un système symétrique dans lequel la broche serait fixée sur la baie et le trou pratiqué dans le cadre remplirait les mêmes fonctions. Cependant, le blocage serait beaucoup moins facile dans les cas de blocage manuel puisqu'il devrait être pratiqué à l'intérieur du joint mousse 5. Il est également prévu grâce à un composant supplémentaire de fixer un profilé enjoliveur 25 assurant la continuité esthétique entre le vitrage et l'élément de carrosserie (**figures 5 et 6**).

Les systèmes de blocage qu'on vient de décrire ne sont pas limitatifs ; en particulier, la variante symétrique broche sur la baie et trous dans le cadre serait avantageusement associée à un système de blocage avec des boulons explosifs. Il est connu, dans l'industrie aéronautique ou dans l'industrie du bâtiment pour l'évacuation des fumées, d'utiliser des systèmes de verrouillage qui peuvent se déverrouiller grâce à l'envoi d'un simple signal électrique qui fait exploser de petites charges explosives placées à des endroits choisis et qui permettent de déverrouiller des systèmes qui, normalement, sont condamnés.

Dans le document RU 2 040 710, on décrit ainsi un système de boulons explosifs avec en plus un métal à mémoire de forme. Des systèmes équivalents peuvent être utilisés de manière à bloquer les broches 6, l'ensemble pouvant être débloqué instantanément et simultanément grâce à un signal électrique qui est commandé de l'intérieur ou même de l'extérieur du véhicule.

Les **figures 7 et 8** montrent une variante du dispositif de l'invention. Dans cette variante, le cadre rigide lié au vitrage n'est plus métallique mais il est en élastomère. Un tel cadre peut avantageusement être déposé sur le vitrage par une technique d'extrusion bien connue, telle que par exemple celle décrite dans le document EP-B-0 121 481. Sur la figure, on voit que le cadre est équipé d'un joint et constitué d'un profilé en deux parties, une partie associée au verre et une autre qui possède un ressaut 17 avec un plan incliné qui permet, grâce un verrou 18, d'exercer une pression qui associe étroitement le joint en élastomère et la tôle 3 de la carrosserie. Le cadre en élastomère 16 est avantageusement équipé d'une lèvre 22 qui permet d'obturer partiellement l'espace qui sépare le vitrage 1 de la feuillure de la baie de carrosserie. Une telle lèvre est décrite notamment dans le document EP-B-0 545 896. Le verrou 18 est conçu de telle manière que son coulissement au travers du trou prévu dans la tôle 3 de la baie de carrosserie lui permette d'exercer la pression sur le ressaut 17. Dans son coulissement latéral, le verrou 18 est guidé par les deux plaques 23, 24. La plaque supérieure 23 coopère avec le verrou 18 de manière à le bloquer lorsqu'il a fini d'exercer sa pression sur le ressaut 17. Le verrou est en effet équipé d'une crémaillère munie de crans 20 et la plaque supérieure 23 est équipée, elle, d'un cliquet 21 qui coopère de manière à bloquer le verrou chaque fois qu'il a progressé d'un cran 20 dans la direction de la fermeture. Le verrou est équipé par ailleurs d'un système, non représenté, qui consiste en un ressort de rappel, c'est-à-dire que, dès que le cliquet 21 est soulevé il libère la crémaillère 20 et permet au ressort en question d'ouvrir complètement le verrou 18 en libérant ainsi le cadre 16. Il suffit alors, une fois tous les verrous 18 déverrouillés, de pousser le pare-brise vers l'extérieur pour libérer l'ouverture.

Les systèmes de l'invention qui viennent d'être décrits dans leur application au pare-brise d'un véhicule de transport en commun sont applicables, de la même manière, à des issues de secours, qu'elles soient d'ailleurs équipées de vitrages ou non, et à des systèmes d'évacuation de fumées, notamment en vitrage plastique ou vitrage feuilleté à base de verre et de polyvinylbutyral.

Avec les systèmes de l'invention, l'homme du métier peut très facilement réaliser une ouverture simultanée de tous les systèmes de fixation mécanique ponctuelle qui sont décrits et libérer ainsi l'ouverture par une commande unique.

## Revendications

1. Système de montage d'un vitrage dans une baie, notamment d'un vitrage de véhicule de transport, comportant un cadre profilé susceptible d'être arraché de la baie, notamment pour permettre l'évacuation de passagers, dans lequel le cadre (2; 16) est rigide, dans lequel le vitrage (1) est lié au cadre (2 ; 16) et dans lequel le cadre (2 ; 16) est associé à la baie (3) par des fixations mécanilques ponctuelles (6 ; 10, 12; 18) dont la libération s'effectue au moins depuis l'un des côtés du vitrage (1), notamment depuis l'intérieur du véhicule, système **caractérisé en ce que** le cadre (2; 16) exerce une force sensiblement perpendiculairement à la surface qu'il définit, sur la baie.

2. Système de montage selon la revendication 1, **caractérisé en ce qu'**il comprend au moins un moyen (13, 14) de libération, commandé depuis au moins un côté du vitrage et agissant sur chacune des fixations mécaniques ponctuelles (6), successivement ou simultanément.

3. Système de montage selon la revendication 1 ou 2, **caractérisé en ce que** le cadre rigide (2) est indépendant, **en ce que** les fixations mécaniques ponctuelles comportent des broches (6) sensiblement parallèles entre elles et à la direction de montage du vitragé (1) dans la baie, **en ce que** les broches (6) traversent des trous (8) correspondants et **en ce que** les broches (6) et les trous (8) sont prévus indifféremment l'un -sur le cadre (2) et l'autre sur la baie (3).

4. Système de montage selon la revendication 3, **caractérisé en ce que** le cadre rigide (2) possède une section triangulaire (9) dans les zones où le vitrage bombé (1) possède une forte courbure périphérique.

5. Système de montage selon la revendication 3 ou la revendication 4, **caractérisé en ce que** le blocage des broches (6) est assuré par des goupilles (7) qui traversent une lumière pratiquée dans les broches (6) sensiblement perpendiculairement: à leur axe.

6. Système de montage selon la revendication 5, **caractérisé en ce que** les goupilles (7) ont une épaisseur croissante **et en ce que** leur largeur est constante et leur permet de coulisser sans- rotation dans la lumière des broches (6).

7. Système de montage selon la revendication 5 ou la revendication 6 prises conjointement avec la revendication 2, **caractérisé en ce que** les goupilles (7) sont reliées par un cordon (13) comportant éventuellement des éléments bloquants (14) entre les goupilles (7) placés de manière à assurer leur extraction une à une.

8. Système de montage selon la revendication 3, **caractérisé en ce que** les fixations mécaniques ponctuelles comportent des éléments bloquants associés aux broches (6) dont le déverrouillage est effectué par un explosif.

9. Système de montage selon l'une des revendications 3 à 8, **caractérisé en ce que** l'étanchéité entre le cadre rigide (2) et la baie (3) est assurée par un joint mousse (5).

10. Système de montage selon la revendication 1 ou 2, **caractérisé en ce que** le cadre rigide (16) est en élastomère **et en ce que** son profil comporte des ressauts (17) où les fixations mécaniques ponctuelles (18) liées à la baie (3) exercent une pression.

11. Système de montage selon la revendication 10, **caractérisé en ce que** les fixations mécaniques ponctuelles comportent des verrous (18) dont le coulissement applique progressivement le cadre (16) sur la baie (3).

12. Système de montage selon la revendication 10, **caractérisé en ce que** les fixations mécaniques ponctuelles (18) comportent des crans (20) encliquetés lorsqu'elles sont fermées et dont la libération s'effectue par une action sur le cliquet (21).

## Claims

1. System for mounting a glazing pane in an opening, in particular a transport vehicle glazing pane, comprising a profiled frame able to be pulled away from the opening, in particular to allow the evacuation of passengers, in which the frame (2; 16) is rigid, in which the glazing pane (1) is connected to the frame (2; 16) and in which the frame (2; 16) is associated with the opening (3) by means of isolated mechanical fixings (6; 10, 12; 18) whose release is effected from at least one of the sides of the glazing pane (1), in particular from the inside of the vehicle, system **characterised in that** the frame (2; 16) exerts a force substantially perpendicular to the surface which it defines, on the opening.

2. Mounting system according to Claim 1, **characterised in that** it comprises at least one release means (13, 14), controlled from at least one side of the glazing pane and acting on each of the isolated mechanical fixings (6), successively or simultaneously.

3. Mounting system according to Claim 1 or 2, **characterised in that** the rigid frame (2) is independent, **in that** the isolated mechanical fixings comprise pins (6) substantially parallel to each other and to the direction of mounting of the glazing pane (1) in the opening, **in that** the pins (6) pass through corresponding holes (8) and **in that** the pins (6) and the holes (8) are provided indifferently one on the frame (2) and the other on the opening (3).

4. Mounting system according to Claim 3, **characterised in that** the rigid frame (2) has a triangular cross-section (9) in the area where the curved glazing pane (1) has a high peripheral curvature.

5. Mounting system according to Claim 3 or Claim 4, **characterised in that** the locking of the pins (6) is provided by pegs (7) which pass through an aperture formed in the pins (6) substantially perpendicular to their axis.

6. Mounting system according to Claim 5, **characterised in that** the pegs (7) have an increasing thickness and **in that** their width is constant and enables them to slide without rotation in the aperture in the pins (6).

7. Mounting system according to Claim 5 or Claim 6 taken conjointly with Claim 2, **characterised in that** the pegs (7) are connected by a cord (13) possibly comprising locking elements (14) between the pegs (7) placed so as to provide the extraction thereof one by one.

8. Mounting system according to Claim 3, **characterised in that** the isolated mechanical fixings comprise locking elements associated with the pins (6) whose release is effected by an explosive.

9. Mounting system according to one of Claims 3 to 8, **characterised in that** the seal between the rigid frame (2) and the opening (3) is provided by a foam joint (5).

10. Mounting system according to Claim 1 or 2, **characterised in that** the rigid frame (16) is made from elastomer and **in that** its profile comprises projections (17) where the isolated mechanical fixings (18) connected to the opening (3) exert pressure.

11. Mounting system according to Claim 10, **characterised in that** the isolated mechanical fixings comprise bolts (18) whose sliding progressively applies the frame (16) against the opening (3).

12. Mounting system according to Claim 10, **characterised in that** the isolated mechanical fixings (18) have catches (20) snapped in when they are closed and whose release is effected by action on the pawl (21).

## Patentansprüche

1. System, um in eine Öffnung eine Verglasung, speziell eine Verglasung für ein Transportfahrzeug, einzubauen, die einen Profilrahmen umfasst, der aus der Öffnung hinausgedrückt werden kann, insbesondere, um den Ausstieg von Fahrzeuginsassen zu ermöglichen, in welchem der Rahmen (2; 16) steif, die Verglasung (1) mit dem Rahmen (2; 16) verbunden und dieser in die Öffnung (3) durch punktuelle mechanische Befestigungsmittel (6; 10, 12; 18) eingepaßt ist, deren Lösung auf mindestens einer Seite der Verglasung (1), speziell vom Innenraum des Fahrzeugs aus, erfolgt, **dadurch gekennzeichnet, dass** der Rahmen (2; 16) eine zu der Fläche, die er abschließt, im Wesentlichen senkrecht verlaufende Kraft auf die Öffnung ausübt.

2. Einbausystem nach Anspruch 1, **dadurch gekennzeichnet, dass** es mindestens ein Lösungs-Mittel (13, 14) umfasst, das von mindestens einer Seite der Verglasung aus betätigt wird und nacheinander oder gleichzeitig auf die punktuellen mechanischen Befestigungsmittel (6) einwirkt.

3. Einbausystem nach Anspruch 1 oder 2, **dadurch gekennzeichnet, dass** der steife Rahmen (2) unabhängig ist, **dass** die punktuellen mechanischen Befestigungsmittel Stifte (6) umfassen, die im Wesentlichen zueinander und zur Richtung des Einbaus der Verglasung (1) in die Öffnung parallel stehen, **dass** die Stifte (6) in entsprechende Löcher (8) führen **und dass** Stifte (6) und Löcher (8) in beliebiger Weise die einen auf dem Rahmen (2) und die anderen auf der Öffnung (3) vorgesehen sind.

4. Einbausystem nach Anspruch 3, **dadurch gekennzeichnet, dass** der steife Rahmen (2) in den Bereichen, in welchen die gebogene Verglasung (1) eine starke Umfangskrümmung aufweist, einen dreieckigen Querschnitt (9) besitzt.

5. Einbausystem nach Anspruch 3 oder 4, **dadurch gekennzeichnet, dass** die Arretierung der Stifte (6) durch Keile (7) erfolgt, die durch eine Öffnung führen, die in den Stiften (6) im Wesentlichen quer zu deren Achse angebracht ist.

6. Einbausystem nach Anspruch 5, **dadurch gekennzeichnet, dass** die Keile (7) eine zunehmende Dicke besitzen, und **dass** ihre Breite konstant ist und es ihnen erlaubt, sich ohne Drehung in die Öffnung der Stifte (6) schieben zu lassen.

7. Einbausystem nach Anspruch 5 oder 6 in Verbindung mit Anspruch 2, **dadurch gekennzeichnet, dass** die Keile (7) durch eine Schnur (13) miteinander verbunden sind, die gegebenenfalls zwischen den Keilen (7) Arretierelemente (14) umfasst, die derart angeordnet sind, dass ihre sukzessive Entfernung sichergestellt ist.

8. Einbausystem nach Anspruch 3, **dadurch gekennzeichnet, dass** die punktuellen mechanischen Befestigungsmittel mit den Stiften (6) verbundene Arretierelemente umfassen, deren Lösung durch einen Explosivstoff erfolgt.

9. Einbausystem nach einem der Ansprüche 3 bis 8, **dadurch gekennzeichnet, dass** die Dichtigkeit zwischen steifem Rahmen (2) und Öffnung (3) von einer Schaumstoffdichtung (5) sichergestellt wird.

10. Einbausystem nach Anspruch 1 oder 2, **dadurch gekennzeichnet, dass** der steife Rahmen (16) aus einem Elastomer besteht, **und dass** sein Profil Vorsprünge (17) umfasst, worauf die mit der Öffnung (3) verbundenen punktuellen mechanischen Befestigungsmittel (18) einen Druck ausüben.

11. Einbausystem nach Anspruch 10, **dadurch gekennzeichnet, dass** die punktuellen mechanischen Befestigungsmittel Riegel (18) umfassen, deren Gleitbewegung nacheinander den Rahmen (16) an die Öffnung (3) andrückt.

12. Einbausystem nach Anspruch 10, **dadurch gekennzeichnet, dass** die punktuellen mechanischen Befestigungsmittel (18) Rastkerben (20) umfassen, die, wenn sie geschlossen sind, eingerastet sind und deren Lösung durch Betätigung der Sperrklinke (21) erfolgt.
